# EUROPÄISCHE PATENTSCHRIFT

(11) **EP 0 843 957 B1**
(45) Veröffentlichungstag und Bekanntmachung des Hinweises auf die Patenterteilung: **01.08.2001**
(21) Anmeldenummer: 97119517.7
(22) Anmeldetag: 07.11.1997
(51) Int. Cl.: A01B 73/04, A01B 49/06

(54) **Bestellkombination aus Kreiselegge und Drillmaschine**
Combined rotary harrow and seed drill
Combinaison de herse rotative et semoir

(30) Priorität: 14.11.1996 DE 19646992; 31.10.1997 DE 19748064
(43) Veröffentlichungstag der Anmeldung: 27.05.1998
(73) Patentinhaber: Lemken GmbH & Co. KG, 46519 Alpen (DE)
(72) Erfinder: Siebers, Joseph, 46509 Xanten (DE); Gebbeken, Martin, Dipl.-Ing., 46519 Alpen (DE)
(74) Vertreter: Schulte, Jörg, Dipl.-Ing.

(56) Entgegenhaltungen:
- EP-A- 0 333 109
- EP-A- 0 422 721
- DE-U- 9 213 091
- FR-A- 2 312 931

## Beschreibung

Die Erfindung betrifft eine Bestellkombination bestehend aus einem zapfwellenbetriebenen Gerät mit Anlenkpunkten für den Anbau an ein Traktordreipunktgestänge, vorzugsweise eine Kreiselegge mit Getriebekasten und nebeneinander angeordneten rotierenden Werkzeugen mit Nachlaufwalzen und einer Drillmaschine mit Saatgutbehälter, die oberhalb des Getriebekastens oder der Nachlaufwalzen angeordnet sind, wobei die Kreiselegge aus mehreren Kreiseleggeneinheiten besteht, die zusammen mit den Nachlaufwalzen um horizontale Achsen schwenkbar ausgebildet sind.

Drillmaschinen sind Reihensämaschinen, die die Samen in Reihen aussäen, wodurch die Pflanzen gute Wachstumsbedingungen erhalten. Das Saatgut wird über entsprechende Fördereinrichtungen aus dem Saatgutbehälter, Trichtern und Saatleitungsröhren zugeführt, über die es dann zum Säschar, insbesondere zum Doppelscheibensäschar gelangt. Diese Säscharen ziehen Furchen, in denen das Saatgut abgelegt wird. Über die nachlaufenden Druckrollen wird die Furche, die ggf. über Zustreifer vorher zugedeckt worden ist, zugedrückt. Derartige Druckrollen werden den Säscharen nachgeordnet. Bekannt ist es auch bereits, derartigen Drillmaschinen mit Kreiseleggen zu kombinieren, d. h. diese den Kreiseleggen zuzuordnen. Sie werden als Bestellkombinationen bezeichnet. Diese Bestellkombinationen sind nur begrenzt einsetzbar, da sie nur bis zu einer Arbeitsbreite von 3 m auf öffentlichen Straßen transportiert werden dürfen und bei größeren Arbeitsbreiten auf sogenannte Langfahrwagen verladen oder mit sogenannten Querfahreinrichtungen transportiert werden müssen. Bestellkombinationen mit kleinen Arbeitsbreiten, d. h. bis max. 3 m haben den Nachteil, dass sie aufgrund ihrer geringen Leistung nur auf kleineren Betrieben wirtschaftlich eingesetzt werden können. Die breiteren Maschinen, d. h. die über 3 m Breite, die mit einem separaten Langfahrwagen bzw. Transportwagen oder mit einer Querfahreinrichtung transportiert werden müssen, haben den Nachteil, dass sie bei Wechsel des Feldes und bei Transportfahrten aber auch bei engen Toreinfahrten und Durchfahrten abgebaut und verladen oder umgebaut werden müssen. Dies reduziert die mit derartigen Bestellkombinationen zu erzielende Leistung und den Einsatzbereich erheblich.

Aus der DE-OS 39 06 971 A1 ist eine Bestellkombination mit einer breiteren Kreiselegge bekannt, die ihrerseits einklappbar ausgebildet ist, der Kreiselegge sind Verteilorgane und Säschienen zugeordnet. Der Saatgutbehälter selbst ist frontseitig an den Traktor angebaut, während Säschiene und Verteilorgane der Kreiselegge zugeordnet und heckseitig am Traktors angebaut sind. Bei einer derartigen Bestellkombination ist aber der Handhabungs- und Manövrierkomfort erheblich eingeschränkt, wozu hinzukommt, dass die Sicht nach vorne durch den vorn angebauten Saatgutbehälter erheblich beeinträchtigt ist. Zusätzlich hat diese Bestellkombination den Nachteil, dass ein weiteres Vorlaufgerät, z. B. ein Frontpacker oder Vorgrubber nicht verwendet werden kann, weil der Frontanbauraum des Traktors durch den Saatgutbehälter besetzt ist. Die gleichen Nachteile weist die Kombination gemäß EP-A1 0 422 721 auf. Die schwenkbaren Kreiseleggeneinheiten sind über Arme gehalten weit neben dem Zugfahrzeug angeordnet und können nur allein von einer Stellung in die andere verschwenkt werden. Aus der EP-A1 0 333 109 ist eine Kreiselegge bekannt, bei der die Kreiseleggeneinheiten in Arbeitsstellung dicht nebeneinander angeordnet sind. Eine Anordnung zur Kombination mit einer Drillmaschine mit Saatgutbehälter ist daraus nicht zu entnehmen. Es fehlt an den notwendigen Anregungen.

Der Erfindung liegt daher die Aufgabe zugrunde, eine Bestellkombination zu schaffen, die einfach an den Traktor angebaut werden kann, die auch Arbeitsbreiten von über 3 m zulässt, dennoch aber auf öffentlichen Wegen und im Bereich von Toreinfahrten u. ä. ohne Umbau oder Abbau einzusetzen ist und die nicht den Frontanbauraum des Traktors belegen und daher auch in Kombination mit Vorlaufgeräten wie Packer, Vorgrubber o. a. Frontanbaugeräten eingesetzt werden können.

Die Aufgabe wird gemäß der Erfindung dadurch gelöst, dass die Kreiselegge aus vorzugsweise zwei unmittelbar nebeneinander angeordneten Getriebekästen bzw. Kreiseleggeneinheiten besteht, die jeweils zusammen mit den Nachlaufwalzen so einschwenkbar ausgebildet sind, dass sie in dieser Stellung den Saatgutbehälter dicht umschließen bzw. einfassen, der zusammen mit der für den Anbau oder Aufbau vorgesehenen Drillmaschine auf der Kreiselegge angeordnet ist.

Mit Hilfe einer derart ausgebildeten Bestellkombination werden die beschriebenen Nachteile vor allem dadurch vermieden, dass die Bestellkombination einklappbar ausgebildet ist, wobei der Saatgutbehälter in der eingeklappten Stellung bzw. in der Transportstellung zwischen den eingeklappten Kreiseleggeneinheiten bzw. zwischen den Nachlaufwalzen positioniert ist. Durch diese Lösung kann die Kreiselegge für den Wechsel des Feldes, für die Transportfahrt und auch beim Passieren enger Durchfahrten einfach eingeklappt werden, ohne vom Traktor abgebaut werden zu müssen und ohne umfangreiche Umbauarbeiten durchführen zu müssen. Das vorgegebene Maß von 3 m wird nicht überschritten, weil der entsprechend ausgebildete Saatgutbehälter und die zum Einsatz kommenden bzw. dann eingeklappten Kreiseleggeneinheiten innerhalb dieses Maßes gehalten werden können. Eine wesentliche Vereinfachung des Handhabungs- und Manövrierkomforts ist damit sichergestellt. Durch Wahl entsprechender Kreiseleggeneinheiten bzw. Getriebekästen kann praktisch jede beliebige Breite einer derartigen Bestellkombination verwirklicht werden.

Die Kreiseleggeneinheiten bzw. Getriebekästen sind um horizontalen Achsen klappbar, die einem Tragrahmen zugeordnet sind, der einerseits den Saatgutbehälter und andererseits Getriebeteile tragend ausgebildet und mit den Kreiseleggeneinheiten verbunden ist. Der beschriebene Tragrahmen ermöglicht, dass die beiden Getriebekästen bzw. Kreiseleggeneinheiten entsprechend um die horizontalen Achsen geschwenkt werden können, und zwar so, dass die in Arbeitsstellung benachbarten Seiten der Kreiseleggeneinheiten in eingeklappter Transportstellung den Boden nicht berühren können. Da auch der Saatgutbehälter auf diesem Tragrahmen angeordnet bzw. aufgebaut ist, ist ein einfaches Hochschwenken der Kreiseleggeneinheiten und ein Einfassen der Drillmaschine durch die beiden Kreiseleggeneinheiten in platzsparender Weise sichergestellt. Weiter vorne ist bereits darauf hingewiesen worden, dass der Tragrahmen auch Getriebeteile trägt, die für den Antrieb der Arbeitswerkzeuge der Kreiselegge benötigt werden. Darüber hinaus sind dem Tragrahmen Schwenkzylinder zugeordnet, die an zu den horizontalen Achsen versetzt angeordneten Hebelarmen bzw. Schwenkansätzen der Kreiseleggeneinheiten gelenkig angeschlagen sind. Werden diese Schwenkzylinder mit Öldruck beaufschlagt, so wird entweder die jeweilige Kreiseleggeneinheit ausgeklappt oder umgekehrt hochgeschwenkt.

Eine Ausbildung der Erfindung sieht vor, dass die horizontalen Achsen der Kreiseleggeneinheiten so angeordnet sind, dass ihre seitliche Außenkontur innerhalb der zulässigen Transportbreite von 3 m und möglichst dicht an diesem Maße liegt. Damit werden die gesetzlichen Vorschriften vorteilhaft einghalten.

Für eine gute Bodenanpassung sieht die Erfindung vor, dass die einzelnen Kreiseleggeneinheiten pendelnd bzw. sich dem Boden anpassend am Tragrahmen angebaut sind. Dadurch ist wie schon erwähnt eine optimale Anpassung der einzelnen Kreiseleggenfelder an die wechselnden Bodenverhältnisse erreicht.

Der Einsatz großer Saatgutbehälter wird dadurch ermöglicht, dass die Kreiseleggeneinheiten mit Getrieben, vorzugsweise flachbauenden Winkelgetrieben ausgerüstet sind, die in eingeklappter Stellung in den durch die trichterförmige Verjüngung des Saatgutbehälters gebildeten Freiraum hineinragend angeordnet sind. Durch diese Konstruktion ist ein Saatgutbehälter zwischen den Kreiseleggeneinheiten einsetzbar, der breiter als 1,5 m vorzugsweise aber mindestens 1,7 m breit ist. Die flachbauenden Winkelgetriebe behindern aufgrund ihrer besonderen Ausbildung das Einklappen der Kreiseleggeneinheiten überhaupt nicht, wobei ihnen entgegenkommt, dass die Saatgutbehälter zur Sicherung des Transportes des eingefüllten Saatgutes entsprechende Schrägen aufweisen müssen. Genau in diesen Bereich der Schrägen reichen die flachbauenden Winkelgetriebe hinein, wenn die Kreiseleggeneinheit hochgeklappt ist.

Um den Verschiebeweg der Gelenkwellen möglichst gering zu halten, sind ihre Gelenke im Bereich der horizontalen Achsen angeordnet, um die die Kreiseleggen einschwenkbar sind.

Besonders vorteilhaft ist es gemäß der Erfindung, wenn die Kreiselegge ausgeklappt breiter als 3 m, z. B. 3,5; 4,0; 4,5 oder noch breiter ist. Dadurch wird die Schlagkraft nicht nur bei Kreiseleggen bzw. Bestellkombinationen mit großer Arbeitsbreite erheblich erhöht, sondern auch bei Bestellkombinationen, bestehend aus Kreiseleggen und Drillmaschinen mit Arbeitsbreiten von 3,5 bis 4,5 Metern.

Eine besonders günstige, darüber hinaus aber auch sehr sichere Verbindung der Kreiseleggeneinheiten mit den Tragrahmen ist die, bei der die einzelnen Kreiseleggeneinheiten über dreipunktartige Befestigungsvorrichtungen mit dem Tragrahmen verbunden sind. Diese dreipunktartigen Befestigungsvorrichtungen beeinträchtigen die Bewegungsfreiheit der Kreiseleggeneinheiten nicht. Besonders vorteilhaft ist es dabei, dass die unteren Befestigungsvorrichtungen in vertikalen Schlitzen geführt sind, die eine Anpassbarkeit der jeweils über die Nachlaufwalzen geführten Kreiseleggeneinheiten gewährleistend ausgebildet sind. Die entsprechende Ausbildung der vertikalen Schlitze gibt noch optimaler die notwendige Anpassbarkeit der jeweils über die Nachlaufwalzen geführten Kreiseleggeneinheiten frei.

Erfindungsgemäß ist weiter vorgesehen, dass die Drillmaschine als pneumatische Drillmaschine ausgebildet ist, deren Gebläse über das Mittelgetriebe der Kreiseleggeneinheiten oder über einen Hydraulikmotor antreibbar ist. Durch diese Konstellation wird der konstruktive Aufwand der Bestellkombination in Grenzen gehalten.

Weiter ist vorgesehen, dass die Drillmaschine eine Säschiene mit Säscharen aufweist, die einklappbar ausgebildet ist oder die an Nachlaufwalzen oder deren Trägern befestigt ist und zusammen mit den Nachlaufwalzen einklappbar ist. Dadurch wird sichergestellt, dass beim Einklappen der Kreiselegge auch die Säschiene eingeklappt wird. Die Einklappung kann generell mit einem einfachwirkenden Steuergerät erfolgen, da die Säschare zusammen mit den Nachlaufwalzen oder seperat über hydraulikzylinder eingeklappt werden kann, die hydraulisch mit den Hydraulikzylindern der Tragrahmen verbunden sind.

Die weiter vorn beschriebene Ausführung sieht quasi eine U-förmige, den Saatgutbehälter umgebende Ausführung von Tragrahmen und Getriebekästen bzw. Kreiseleggeneinheiten vor. Diese U-förmige Konstruktion nimmt mittig den Saatgutbehälter auf, der aufgrund dieser Ausbildung ein sehr großes Volumen aufweisen kann. Dort wo kleinere Bestellkombinationen zum Einsatz kommen oder wo man mit kleineren Saatgutbehältern arbeiten kann oder muss, ist es von Vorteil, wenn die Kreiseleggeneinheiten V-förmig einklappbar ausgebildet sind. Bei Inkaufnahme eines kleineren Aufnahmevolumens hat eine solche Ausbildung aber den Vorteil, dass die Übertragung der Antriebskraft für die Arbeitswerkzeuge der Kreiselegge wesentlicher einfacher vorgenommen werden kann. Auf Gelenkwellen kann hier verzichtet werden, weil jeweils das erste Arbeitswerkzeug einer Kreiseleggeneinheit direkt angetrieben werden kann. Dementsprechend sieht die Erfindung ergänzend vor, dass die horizontalen Achsen dem auf das erste Arbeitswerkzeug einwirkenden Zentralgetriebe zugeordnet sind, die geringfügig außermittig unterhalb des Saatgutbehälters angeordnet sind. Wie schon erwähnt können dann die Saatgutbehälter ein etwas geringeres Aufnahmevolumen aufweisen.

Die Erfindung zeichnet sich dadurch aus, dass eine Bestellkombination geschaffen, die überraschend große Saatgutbehälter aufweist und trotzdem ohne die Sicht des Fahrers zu behindern, problemlos auch durch Engpässe hindurchgelenkt werden kann. Grund hierfür ist, dass die vor allem zweiteilige Kreiselegge Kreiseleggeneinheiten aufweist, die um horizontale Achsen so verschwenkbar sind, dass sie an die senkrechten Wände des Saatgutbehälters dicht herangeschwenkt werden können. Saatgutbehälter und Kreiseleggeneinheiten gehen dabei nicht über das Breitenmass von 3 Metern hinaus, sodass sowohl ein Transport auf der Staße wie auch durch enge Tor- und Feldeinfahrten problemlos möglich ist. Da nun der Saatgutbehälter im Heckbereich des Traktors angeordnet wird und zwar auf der Kreiselegge, bleibt der vordere Bereich des Traktors frei zum Anschlagen weiterer Geräte.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: eine Bestellkombination mit um 90° einschwenkbaren Kreiseleggeneinheiten, wobei eine der Einheiten eingeschwenkt ist,
- Fig. 2: eine Bestellkombination mit V-förmig einschwenkbaren Kreiseleggeneinheiten, wobei wiederum eine der Kreiseleggeneinheiten im eingeschwenkten Zustand wiedergegeben ist und
- Fig. 3: eine vereinfacht dargestellte Bestellkombination mit Säschine.

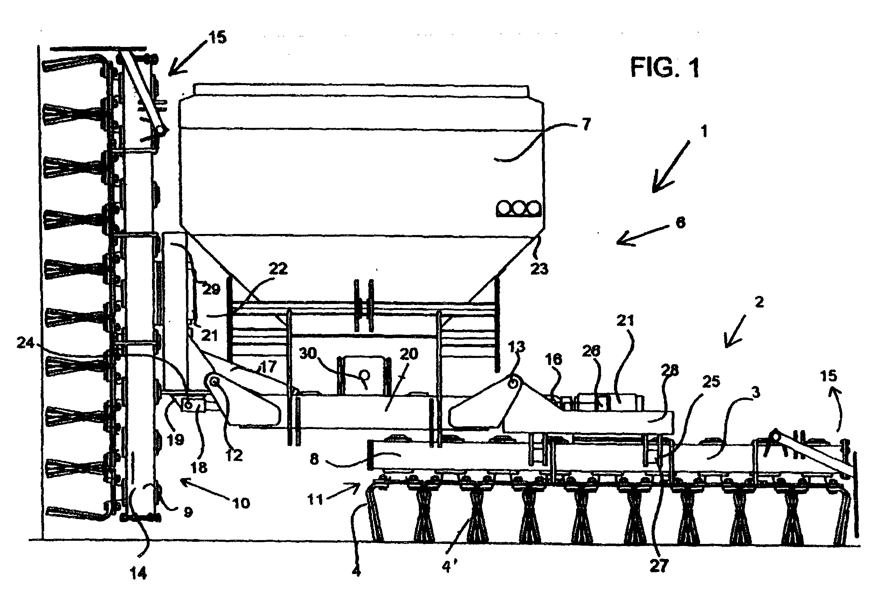

Die in Fig. 1 wiedergegebene Bestellkombination 1 besteht aus der Kreiselegge 2 mit zwei Getriebekästen 3 und entsprechend zugeordneten Arbeitswerkzeugen 4, 4' und der Drillmaschine 6. Mit 5 sind die Nachlaufwalzen bezeichnet.

Von der Drillmaschine 6 ist der Saatgutbehälter 7 der gesamten Bestellkombination 1 wiedergegeben. Der Getriebekasten 3 ist bei der wiedergegebenen Kreiselegge 2 in zwei Teilgetriebekästen 8, 9 unterteilt. Beide sind gleich ausgebildet und getrennt als Kreiseleggeneinheit 10, 11 um die horizontalen Achsen 12 und 13 schwenkbar.

Die Achsen 12, 13 sind horizontal angeordnet, sodass dadurch die Möglichkeit gegeben ist, die jeweilige Kreiseleggeneinheit 10, 11 in vertikaler Richtung zu verschwenken bzw. sie in der eingeklappten Stellung 15 in die vertikale Richtung 14 zu bringen.

Der Saatgutbehälter 7 ist an den Tragrahmen 20 angebaut, der zugleich auch die Kreiseleggeneinheiten 10, 11 trägt sowie Gelenkwellen 16, 17 und Schwenkzylinder 18, die an die Schwenkansätze 19 angreifen, um die Kreiseleggeneinheiten 10, 11 in die eingeklappte Stellung 15 oder in die waagerechte Position zu bringen.

Die den einzelnen Getriebekästen bzw. Teilgetriebekästen 8, 9 zugeordneten Arbeitswerkzeuge 4 werden über die Gelenkwellen 16, 17 und das Winkelgetriebe 21 angetrieben. Durch Einsatz derartiger Winkelgetriebes 21 ist die Möglichkeit gegeben, die Kreiseleggeneinheiten 10, 11 dicht an den Saatgutbehälter 7 heranzuschwenken, wobei die Winkelgetriebe 21 in den Freiraum 22 hineinragen, der sich im Bereich der Schrägen 23 ergibt. Diese Schrägen 23 sind notwendig, um die Förderung des Saatgutes innerhalb des Saatgutbehälters 7 sicherzustellen.

Darauf hingewiesen worden ist bereits, dass die Schwenkarbeit durch Hydraulikzylinder bzw. Schwenkzylinder 18 bewerkstelligt wird. Diese Schwenkzylinder 18 sind dazu schwenkbeweglich sowohl an dem Tragrahmen 20 wie auch den Schwenkansätzen 19 angebracht. Klar erkennbar ist, dass die Gelenke 24 versetzt zu den horizontalen Achsen 12 bzw. 13 angeordnet sind, sodass die notwendige Kraft für den Schwenkvorgang gut aufgebracht werden kann.

Zur Befestigung der Teilarme 28, 29 am Getiebekasten 3 bzw. Teilgetriebekasten 8, 9 sind Befestigungsvorrichtungen 25, 26 vorgesehen, die dreipunktartig ausgebildet sind und die einen schnellen und sicheren Anbau an den Tragrahmen 20 ermöglichen. Die untere Befestigungsvorrichtung 25 ist in vertikalen Schlitzen 27.geführt, um die Anpassbarkeit der jeweils über die Nachlaufwalzen geführten Kreiseleggeneinheiten 10, 11 optimal zu gewährleisten.

Bei der Ausführung nach Fig. 1 finden platzgünstige Winkelgetriebe 21 Verwendung, die in den Freiraum 22 hinein schwenkbar sind, ohne eine Behinderung darzustellen bzw. ohne behindert zu werden. Diese Winkelgetriebe 21 werden über die Gelenkwellen 16, 17 mit dem Mittelgetriebe 30 verbunden.

Die hier dargestellte Drillmaschine 6 ist als pneumatische Drillmaschine ausgebildet, deren Gebläse über das Mittelgetriebe 30 der Kreiselegge 2 mit angetrieben oder aber über einen Hydraulikmotor angetrieben ist. Durch diese Konstellation wird der konstruktive Aufwand der Bestellkombination 1 in Grenzen gehalten.

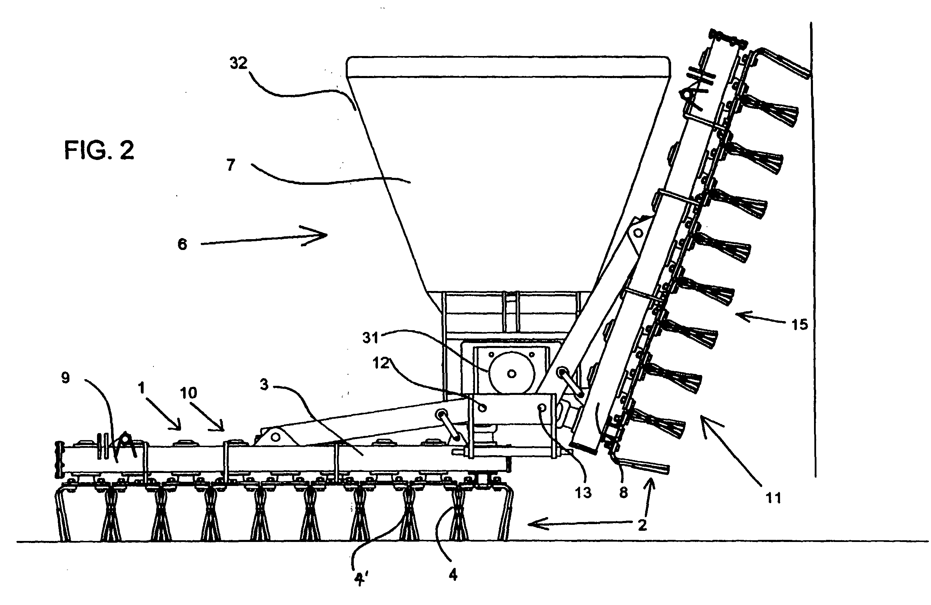

Fig. 2 unterscheidet sich von der Darstellung nach Fig. 1 nur dadurch, dass ein kleinerer, quasi V-förmiger Saatgutbehälter 7 zum Einsatz kommt. Unterhalb dieses einen entsprechend schmalen Boden aufweisenden Saatgutbehälters 7 ist ein Zentralgetriebe 31 vorgesehen, das direkt das jeweils erste Arbeitswerkzeug 4 antreibt, über das die anderen Werkzeuge 4' dann angetrieben werden.

Erkennbar ist anhand Fig. 2, dass die beiden Kreiseleggeneinheiten 10, 11 V-förmig an die entsprechend schräg verlaufende Wandung 32 des Saatgutbehälters 7 herangeschwenkt werden können, d. h. sie können nicht bis in die Senkrechte geschwenkt werden, wobei aufgrund des entsprechend kleiner bemessenen Saatgutbehälters 7 eine Gesamtbreite von 3 m eingehalten werden kann, sodass auch ein derart ausgebildetes Gerät, d. h. eine entsprechende Bestellkombination 1 einen Transport unter beengten Verhältnissen zulässt.

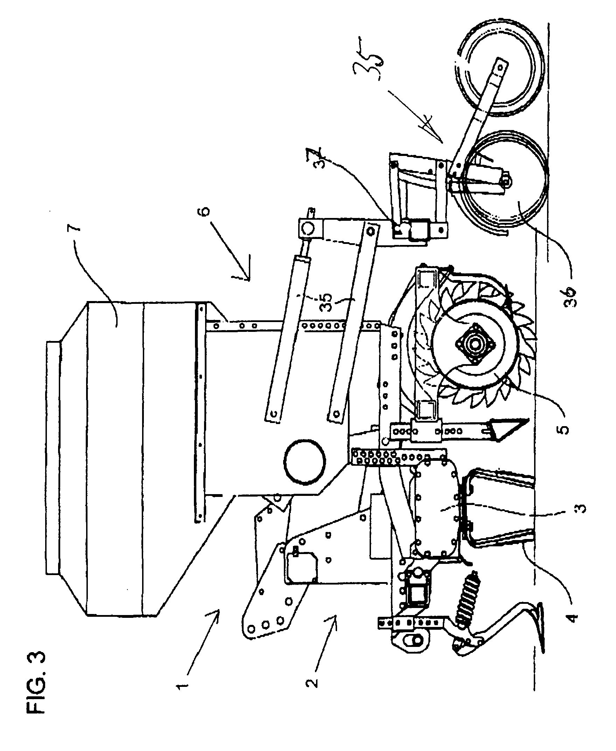

Fig. 3 verdeutlicht die Anordnung der Säschiene 35 und den Aufbau der Drillmaschine 6 auf der Kreiselegge 2. Dabei ist der Einfachheit halber auf Details der Einklappung verzichtet. Deutlich ist aber zu erkennen, dass der Saatgutbehälter 7 oberhalb der Kreiselegge bzw. der Nachlaufwalzen 5 angeordnet ist. Die Schäschine 35 ist über das Einstellgestänge 37 mit dem Rahmen der Drillmaschine 6 verbunden und einklappbar ausgebildet.

## Patentansprüche

1. Bestellkombination (1) bestehend aus einem zapfwellenbetriebenen Gerät mit Anlenkpunkten für den Anbau an ein Traktordreipunktgestänge, vorzugsweise eine Kreiselegge (2) mit Getriebekasten (3) und nebeneinander angeordneten rotierenden Werkzeugen (4) mit Nachlaufwalzen (5) und einer Drillmaschine (6) mit Saatgutbehälter (7), die oberhalb des Getriebekastens (3) oder der Nachlaufwalzen (5) angeordnet sind, wobei die Kreiselegge (2) aus mehreren Kreiseleggeneinheiten (10, 11) besteht, die zusammen mit den Nachlaufwalzen (5) um horizontale Achsen (12, 13) schwenkbar ausgebildet sind,
**dadurch gekennzeichnet,**
dass die Kreiselegge (2) aus vorzugsweise zwei unmittelbar nebeneinander angeordneten Getriebekästen (8, 9) bzw. Kreiseleggeneinheiten (10, 11) besteht, die jeweils zusammen mit den Nachlaufwalzen (5) so einschwenkbar ausgebildet sind, dass sie in dieser Stellung den Saatgutbehälter (7) dicht umschließen bzw. einfassen, der zusammen mit der für den Anbau oder Aufbau vorgesehenen Drillmaschine (6) auf der Kreiselegge (2) angeordnet ist.

2. Bestellkombination nach Anspruch 1,
**dadurch gekennzeichnet,**
dass die horizontalen Achsen (12, 13) einem Tragrahmen (20) zugeordnet sind, der einerseits den Saatgutbehälter (7) und andererseits Getriebeteile tragend ausgebildet und mit den Kreiseleggeneinheiten (10, 11) verbunden ist.

3. Bestellkombination nach Anspruch 2,
**dadurch gekennzeichnet,**
dass der Tragrahmen (20) über Schwenkzylinder (18) verfügt, die an zu den horizontalen Achsen (12, 13) versetzt angeordneten Schwenkansätzen (19) der Kreiseleggeneinheiten (10, 11) gelenkig angeschlagen sind.

4. Bestellkombination nach einem der vorhergehenden Ansprüche,
**dadurch gekennzeichnet,**
dass die horizontalen Achsen (12, 13) der Kreiseleggeneinheiten (10, 11) so angeordnet sind, dass ihre seitliche Außenkontur innerhalb der zulässigen Transportbreite von 3 m und möglichst dicht an diesem Maß liegt.

5. Bestellkombination nach einem der vorhergehenden Ansprüche,
**dadurch gekennzeichnet,**
dass die einzelnen Kreiseleggeneinheiten (10, 11) pendelnd bzw. sich dem Boden anpassend am Tragrahmen (20) angebaut sind.

6. Bestellkombination nach einem der vorhergehenden Ansprüche,
**dadurch gekennzeichnet,**
dass die Kreiseleggeneinheiten (10, 11) mit Getrieben, vorzugsweise flachbauenden Winkelgetrieben (21) ausgerüstet sind, die in eingeklappter Stellung in den durch die trichterförmige Verjüngung des Saatgutbehälters gebildeten Freiraum (22) hineinragend angeordnet sind.

7. Bestellkombination nach einem der vorhergehenden Ansprüche,
**dadurch gekennzeichnet,**
dass der Saatgutbehälter (7) breiter als 1,5 m, vorzugsweise 1,7 m breit ist.

8. Bestellkombination nach einem der vorhergehenden Ansprüche,
**dadurch gekennzeichnet,**
dass die horizontalen Achsen (12, 13), um die die Kreiseleggeneinheiten (10, 11) einschwenkbar sind, im Bereich der Gelenkwellen (16, 17) angeordnet sind.

9. Bestellkombination nach einem der vorhergehenden Ansprüche,
**dadurch gekennzeichnet,**
dass die Kreiselegge (2) ausgeklappt breiter als 3 m, z. B. 3,5; 4,0; 4,5 oder noch breiter ist.

10. Bestellkombination nach einem der vorhergehenden Ansprüche,
**dadurch gekennzeichnet,**
dass die einzelnen Kreiseleggeneinheiten (10, 11) über dreipunktartige Befestigungsvorrichtungen (25, 26) mit dem Tragrahmen (20) verbunden sind.

11. Bestellkombination nach einem der vorhergehenden Ansprüche,
**dadurch gekennzeichnet,**
dass die unteren Befestigungsvorrichtungen (25) in vertikalen Schlitzen (27) geführt sind, die eine Anpassbarkeit der jeweils über die Nachlaufwalzen geführten Kreiseleggeneinheiten (10, 11) gewährleistend ausgebildet sind.

12. Bestellkombination nach einem der vorhergehenden Ansprüche,
**dadurch gekennzeichnet,**
dass die Drillmaschine (6) als pneumatische Drillmaschine ausgebildet ist, deren Gebläse über das Mittelgetriebe (30) der Kreiseleggeneinheiten (10, 11) oder über einen Hydraulikmotor antreibbar ist.

13. Bestellkombination nach einem der vorhergehenden Ansprüche,
**dadurch gekennzeichnet**,
dass die Drillmaschine (6) eine Säschiene (35) mit Säscharen (36) aufweist, die einklappbar ausgebildet ist oder die an Nachlaufwalzen oder deren Trägern befestigt ist und zusammen mit den Nachlaufwalzen einklappbar ist.

14. Bestellkombination nach einem der vorhergehenden Ansprüche,
**dadurch gekennzeichnet,**
dass die Kreiseleggeneinheiten (10, 11) V-förmig und um den Saatgutbehälter (7) schwenkbar ausgebildet sind.

15. Bestellkombination nach Anspruch 14,
**dadurch gekennzeichnet**,
dass die horizontalen Achsen (12, 13) dem auf das erste Arbeitswerkzeug (4) einwirkenden Zentralgetriebe (31) zugeordnet sind, die geringfügig außermittig unterhalb des Saatgutbehälters (7) angeordnet sind.

## Claims

1. Tilling combination (1) consisting of a device with coupling points driven by a power take-off shaft for attaching to a three-point tractor linkage, preferably a circular spike harrow (2) with a gear casing (3) and rotating tools (4) arranged next to one another with follow-on rollers (5) and a drilling machine (6) with seed containers (7) arranged above the gear casing (3) or the follow-on rollers (5), wherein the circular spike harrow (2) consists of a plurality of circular spike harrow units (10, 11) which are designed to pivot about horizontal axes (12, 13) together with the follow-on rollers (5), characterised in that the circular spike harrow (2) consists, preferably, of two gear casings (8, 9) and circular spike harrow units (10, 11) arranged directly next to one another which are designed together with the follow-on rollers (5), in each case, to pivot in in such a way that, in this position, they tightly enclose or frame the seed container (7) which is arranged on the circular spike harrow (2) together with the drilling machine (6) provided for cultivation or construction.

2. Tilling combination according to claim 1, characterised in that the horizontal axes (12, 13) are associated with a support frame (20) which is designed to support the seed container (7), on the one hand, and gearing parts, on the other hand, and is connected to the circular spike harrow units (10, 11).

3. Tilling combination according to claim 2, characterised in that the support frame (20) has pivoting cylinders (18) which are fastened in an articulated manner to pivoting projections (19) of the circular spike harrow units (10, 11), which pivoting projections (19) are arranged offset from the horizontal axes (12, 13).

4. Tilling combination according to one of the preceding claims, characterised in that the horizontal axes (12, 13) of the circular spike harrow units (10, 11) are arranged in such a way that their lateral external contour is within the admissible transport width of 3 m and is as close as possible to this measurement.

5. Tilling combination according to one of the preceding claims, characterised in that the individual circular spike harrow units (10, 11) are attached to the support frame (20) in an oscillating manner or are adapted to the ground.

6. Tilling combination according to one of the preceding claims, characterised in that the circular spike harrow units (10, 11) are equipped with gearings, preferably flat angular gearings (21) which in the retracted position are arranged to project into the free space (22) formed by the funnel-shaped tapering of the seed container.

7. Tilling combination according to one of the preceding claims, characterised in that the seed container (7) is wider than 1.5 m, preferably 1.7 m.

8. Tilling combination according to one of the preceding claims, characterised in that the horizontal axes (12, 13) about which the circular spike harrow units (10, 11) can be pivoted, are arranged in the region of the articulated shafts (16, 17).

9. Tilling combination according to one of the preceding claims, characterised in that the circular spike harrow (2) is wider than 3 m, for example 3.5; 4.0; 4.5 or even wider when opened out.

10. Tilling combination according to one of the preceding claims, characterised in that the individual circular spike harrow units (10, 11) are connected to the support frame (20) by means of three-point-type fastening devices (25, 26).

11. Tilling combination according to one of the preceding claims, characterised in that the lower fastening devices (25) are guided in vertical slots (27) which are designed to guarantee adaptability of the circular spike harrow units (10, 11) guided by means of the follow-on rollers, in each case.

12. Tilling combination according to one of the preceding claims, characterised in that the drilling machine (6) is designed as a pneumatic drilling machine, the fans of which can be driven via the middle gearing (30) of the circular spike harrow units (10, 11) or via an hydraulic motor.

13. Tilling combination according to one of the preceding claims, characterised in that the drilling machine (6) has a sowing rail (35) with sewing shares (36) which is designed to be retractable or is fastened to follow-on rollers or their supports and can be retracted together with the follow-on rollers.

14. Tilling combination according to one of the preceding claims, characterised in that the circular spike harrow units (10, 11) are V-shaped in design and can be pivoted about the seed container (7).

15. Tilling combination according to claim 14, characterised in that the horizontal axes (12, 13) are associated with the central gearing (31) acting on the first operating tool (4), which horizontal axes (12, 13) are arranged below the seed container (7) slightly off-centre.

## Revendications

1. Appareil combiné de culture (1) constitué par un appareil fonctionnant avec des prises de force et comportant des points d'articulation pour son montage sur une tringlerie à trois points d'un tracteur, de préférence une herse rotative (2) comportant une boîte de mécanisme (3) et des outils rotatifs (4) disposés côte-à-côte et comportant des rouleaux suiveurs et un semoir (6) comportant un récipient pour semences (7), et qui sont disposés au-dessus de la boîte de mécanisme (3) ou des rouleaux suiveurs (5), la herse rotative (2) étant constituée par plusieurs unités (10, 11) de herse rotative, qui sont agencées de manière à pouvoir pivoter conjointement avec les rouleaux suiveurs (5) autour d'axes horizontaux (12, 13),
caractérisé en ce
que la herse rotative (2) est constituée de préférence de deux boîtes de mécanisme (8, 9) et d'unités (10, 11) de herse rotative, disposées directement côte-à-côte et qui sont agencées de manière à pouvoir être rabattues par pivotement respectivement conjointement avec les rouleaux suiveurs (5) de telle sorte que, dans cette position, elles entourent ou enserrent étroitement le récipient à semences (7) qui est disposé, conjointement avec le semoir (6), prévu pour son raccordement ou son montage, sur la herse rotative (2).

2. Appareil combiné de culture selon la revendication 1, caractérisé en ce
que les axes horizontaux (12, 13) sont associés à un châssis de support (20), qui est agencé de manière à supporter d'une part le récipient à semences (7) et d'autre part des parties de mécanisme et est relié aux unités (10, 11) de herse rotative.

3. Appareil combiné de culture selon la revendication 2, caractérisé en ce que le cadre de support (20) comporte des vérins de pivotement (18), qui sont reliés de façon articulée à des appendices saillants pivotants (19), qui sont disposés en étant décalés par rapport aux axes horizontaux (12, 13), des unités (10, 11) de herse rotative.

4. Appareil combiné de culture selon l'une des revendications précédentes, caractérisé en ce
que les axes horizontaux (12, 13) des unités (10, 11) de herse rotative sont disposés de telle sorte que leur contour extérieur latéral est disposé dans les limites de la largeur admissible de transport de 3 m et aussi près que possible de cette cote.

5. Appareil combiné de culture selon l'une des revendications précédentes, caractérisé en ce
que les différentes unités (10, 11) de herse rotative sont montées d'une manière pendulaire ou d'une manière s'adaptant au sol, sur le cadre de support (20).

6. Appareil combiné de culture selon l'une des revendications précédentes, caractérisé en ce
que les unités (10, 11) de herse rotative sont équipées de mécanismes, de préférence de mécanismes de renvoi (21) ayant une configuration plate et qui, dans la position rétractée par rabattement, sont disposés dans l'espace libre (22) défini par le rétrécissement en forme d'entonnoir du récipient à semences.

7. Appareil combiné de culture selon l'une des revendications précédentes, caractérisé en ce
que le récipient à semences (7) possède une largeur supérieure à 1,5 m et de préférence égale à 1,7 m.

8. Appareil combiné de culture selon l'une des revendications précédentes, caractérisé en ce
que les axes horizontaux (12, 13), autour desquels les unités (10, 11) de herse rotative peuvent pivoter, sont disposées au niveau des arbres d'articulation (16, 17).

9. Appareil combiné de culture selon l'une des revendications précédentes, caractérisé en ce
que la herse rotative (2) possède, à l'état déployé par rabattement, une largeur supérieure à 3 m et par exemple égale à 3,5, 4,0, 4,5 m ou plus.

10. Appareil combiné de culture selon l'une des revendications précédentes, caractérisé en ce
que les différentes unités (10, 11) de herse rotative sont reliées au cadre de support (20) par l'intermédiaire de dispositifs de fixation (25, 26) du type en trois points.

11. Appareil combiné de culture selon l'une des revendications précédentes, caractérisé en ce
que les dispositif inférieurs de fixation (25) sont guidés dans des fentes verticales (27), qui sont agencées de manière à garantir une capacité d'adaptation des unités (10, 11) de herse rotative qui sont guidées respectivement par l'intermédiaire des rouleaux suiveurs.

12. Appareil combiné de culture selon l'une des revendications précédentes, caractérisé en ce
que le semoir (6) est agencé sous la forme d'un semoir pneumatique, dont le ventilateur peut être entraîné par l'intermédiaire du mécanisme central (30) des unités (10, 11) de herse rotative ou par l'intermédiaire d'un moteur hydraulique.

13. Appareil combiné de culture selon l'une des revendications précédentes, caractérisé en ce
que le semoir (6) comporte un rail pour semis (35) comportant des socs pour semis (36), qui est agencé de manière à être rabattable ou qui est fixé sur les rouleaux suiveurs ou sur leurs supports et est rabattable conjointement avec les cylindres arrière.

14. Appareil combiné de culture selon l'une des revendications précédentes, caractérisé en ce
que les unités (10, 11) de herse rotative sont agencées en forme de V de manière à pouvoir pivoter autour du récipient à semences (7).

15. Appareil combiné de culture selon la revendication 14, caractérisé en ce
que les axes horizontaux (12, 13) sont associés au mécanisme central (31) qui agit sur le premier outil de travail (4), les axes étant disposés d'une manière légèrement excentrée au-dessous du récipient à semences (7).
